# EUROPEAN PATENT APPLICATION

(11) **EP 4 424 734 A1**
(43) Date of publication of application: **04.09.2024**
(21) Application number: 22886846.9
(22) Date of filing: 20.10.2022
(51) Int. Cl.: C08G 14/073, C08L 61/34

(54) **THERMOSETTING RESIN, COMPOSITION, UNCURED MOLDED BODY, PARTIALLY CURED MOLDED BODY, CURED MOLDED BODY, AND METHOD FOR PRODUCING THERMOSETTING RESIN**

(30) Priority: 29.10.2021 JP 2021177095
(71) Applicant: Kaneka Corporation, Osaka-shi, Osaka 530-8288 (JP)
(72) Inventor: NONOMURA, Asato, Settsu-shi, Osaka 566-0072 (JP)
(74) Representative: Hoffmann Eitle
(86) International application number: PCT/JP2022/039062
(87) International publication number: WO 2023/074518

(57) **Abstract**

Provided is a benzoxazine-based thermosetting resin which is excellent in thermoplasticity during remolding and a method for producing the benzoxazine-based thermosetting resin. The thermosetting resin is a thermosetting resin which has a benzoxazine ring structure in a main chain and which has a tetravalent aromatic group that is derived from a bifunctional phenol compound (A) and a bifunctional epoxy compound (B), a tetravalent aromatic group that is derived from the bifunctional phenol compound (A), and a bivalent aromatic group that is derived from an aromatic diamine compound (C).

## Description

### Technical Field

The present disclosure relates to a thermosetting resin which has a benzoxazine ring structure in a main chain and a method for producing the thermosetting resin.

### Background Art

It is known that a benzoxazine compound cures without generating a volatile component, in a case where a benzoxazine ring undergoes, by heat or the like, ring opening polymerization and a reaction. Therefore, a thermosetting resin that contains, as a main component, a low molecular weight compound or a polymer each of which has a benzoxazine structure has various advantages such as a low dielectric constant and low cure shrinkage, in addition to the basic characteristics, such as heat resistance, water resistance, chemical resistance, mechanical strength, and long-term reliability, of a thermosetting resin, and has been attracting attention. Here, although a low molecular weight compound which has a benzoxazine structure is easy to produce, the low molecular weight compound has characteristics of, for example, being poor in handleability, for example, being brittle in a solid state before curing. Although a polymer which has a benzoxazine structure is good in handleability in a solid state before curing, the polymer has characteristics of, for example, being difficult to produce. Therefore, different polymers are used, depending on the characteristics of the polymers.

Patent Literature 1 discloses a method of producing a benzoxazine compound by reacting bivalent phenol, a bivalent amine, and formaldehyde or paraformaldehyde.

### Citation List

### [Patent Literature]

[Patent Literature 1]
Japanese Patent Application Publication Tokukai No. 2009-258713

### Summary of Invention

### Technical Problem

However, a conventional benzoxazine-based resin as stated above has room for improvement, in terms of thermoplasticity during remolding.

An object of an aspect of the present disclosure is to provide a benzoxazine-based thermosetting resin which is excellent in thermoplasticity during remolding and a method for producing the benzoxazine-based thermosetting resin.

### Solution to Problem

In order to attain the above object, a thermosetting resin in accordance with an aspect of the present disclosure has, in a main chain, a benzoxazine ring structure represented by a general formula (I):

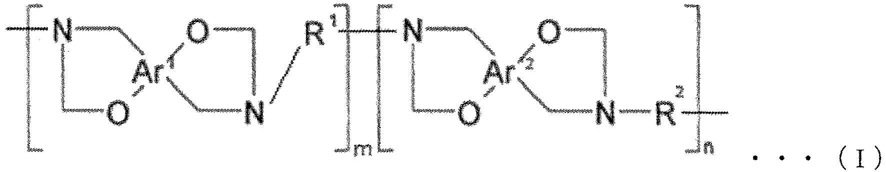

[wherein:
Ar¹ represents a tetravalent aromatic group that is derived from a bifunctional phenol compound (A) and a bifunctional epoxy compound (B);
Ar² represents a tetravalent aromatic group that is derived from the bifunctional phenol compound (A);
R¹ and R² each independently represent a bivalent aromatic group that is derived from an aromatic diamine compound (C) having two or more aromatic rings and two amino groups which are directly bound to any of the two or more aromatic rings, and may be identical to or different from each other;
m represents an integer of 1 or more;
n represents an integer of 0 or more; and
a repeating unit indicated by m and a repeating unit indicated by n are repeated randomly, repeated as blocks, or copolymerized in an alternating manner].

In order to attain the above object, a thermosetting resin in accordance with an aspect of the present disclosure is a thermosetting resin which has a benzoxazine ring structure in a main chain, wherein
an uncured molded product that is obtained by molding the thermosetting resin and that has a degree of cure of less than 1% or a partially cured molded product that is obtained by curing the thermosetting resin and that has a degree of cure of 1% to 99% has thermoplastic remoldability,
the thermoplastic remoldability refers to a property in which, after the uncured molded product or the partially cured molded product is deformed in any shape, the uncured molded product or the partially cured molded product is restored to a shape before deformation, by heating at not higher than 200°C, and
the uncured molded product or the partially cured molded product has repetitive thermoplasticity that is a property in which the thermoplastic remoldability is maintained even in a case where the deformation and the heating are carried out once or more.

In order to attain the above object, a method for producing a thermosetting resin in accordance with an aspect of the present disclosure is a method for producing a thermosetting resin which has a benzoxazine ring structure in a main chain, including:
a step (s1) of reacting a bifunctional phenol compound (A) and a bifunctional epoxy compound (B); and
a step (s2) of reacting a reaction product obtained in the step (s1), an aromatic diamine compound (C), and an aldehyde compound (D) and/or a step (s3) of reacting the bifunctional phenol compound (A), the reaction product obtained in the step (s1), the aromatic diamine compound (C), and the aldehyde compound (D), wherein
the bifunctional epoxy compound (B) has (i) a bisphenol skeleton that is derived from a bifunctional phenol compound and (ii) a glycidyl group that is bound to each of termini of the skeleton via an ether bond, and
the aromatic diamine compound (C) has two or more aromatic rings and two amino groups that are directly bound to any of the two or more aromatic rings.

### Advantageous Effects of Invention

According to an aspect of the present invention, it is possible to provide a benzoxazine-based thermosetting resin which is excellent in thermoplasticity during remolding.

### Description of Embodiments

### [1. Thermosetting resin]

The following description will discuss examples of embodiments of the present disclosure in detail. The present disclosure is, however, not limited to the embodiments. Note that a numerical range expressed as "A to B" means "not less than A and not more than B", unless otherwise specified in this specification.

A thermosetting resin of the present disclosure has, in a main chain, a benzoxazine ring structure represented by the following general formula (I):

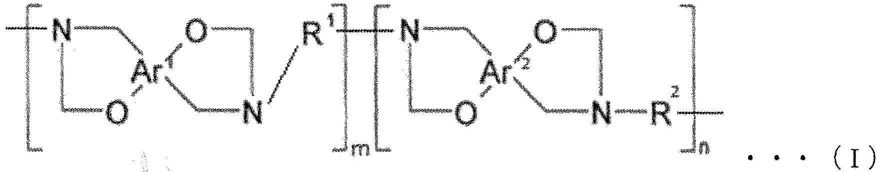

[wherein:
Ar¹ represents a tetravalent aromatic group that is derived from a bifunctional phenol compound (A) and a bifunctional epoxy compound (B);
Ar² represents a tetravalent aromatic group that is derived from the bifunctional phenol compound (A);
R¹ and R² each independently represent a bivalent aromatic group that is derived from an aromatic diamine compound (C) having two or more aromatic rings and two amino groups which are directly bound to any of the two or more aromatic rings, and may be identical to or different from each other;
m represents an integer of 1 or more;
n represents an integer of 0 or more; and
a repeating unit indicated by m and a repeating unit indicated by n are repeated randomly, repeated as blocks, or copolymerized in an alternating manner].

In the general formula (I), Ar¹ represents the tetravalent aromatic group that is derived from the bifunctional phenol compound (A) and the bifunctional epoxy compound (B). Note, here, that the tetravalent aromatic group refers to a structure having at least one aromatic ring and four bonding sites.

The bifunctional phenol compound (A) is suitably one that has a structure in which an OH group thereof and an ortho position can be incorporated into a benzoxazine ring. Examples of the bifunctional phenol compound (A) include dihydroxydiphenylmethane compounds, dihydroxydiphenylethane compounds, dihydroxydiphenylpropane compounds, dihydroxydiphenylbutane compounds, dihydroxydiphenylcyclohexane compounds, and other dihydroxydiphenyl compounds.

The dihydroxydiphenylmethane compounds include bis(4-hydroxyphenyl)diphenylmethane and bis(4-hydroxyphenyl)methane (common name: bisphenol F).

The dihydroxydiphenylethane compounds include 1,1-bis(4-hydroxyphenyl)-1-phenylethane and 1,1-bis(4-hydroxyphenyl)ethane (common name: bisphenol E).

The dihydroxydiphenylpropane compounds include 2,2-bis(4-hydroxyphenyl)propane (common name: bisphenol A or BPA), 2,2-bis(4-hydroxyphenyl)hexafluoropropane, 2,2-bis(3-methyl-4-hydroxyphenyl)propane, 2,2-bis(4-hydroxy-3-isopropylphenyl)propane, and 5,5'-(1-methylethylidene)-bis[1,1'-(bisphenyl)-2-ol]propane.

The dihydroxydiphenylbutane compounds include 2,2-bis(4-hydroxyphenyl)butane (common name: bisphenol B).

The dihydroxydiphenylcyclohexane compounds include 1, 1-bis(4-hydroxyphenyl)-3,3,5-trimethylcyclohexane, and 1,1-bis(4-hydroxyphenyl) cyclohexane.

The other dihydroxydiphenyl compounds include bis(4-hydroxyphenyl)-2,2-dichloroethylene, bis(4-hydroxyphenyl)sulfone, 1,3-bis(2-(4-hydroxyphenyl)-2-propyl)benzene, and 1,4-bis(2-(4-hydroxyphenyl)-2-propyl)benzene.

Among the above-listed bifunctional phenol compounds, bis(4-hydroxyphenyl)methane and 2,2-bis(4-hydroxyphenyl)propane are preferable, and 2,2-bis(4-hydroxyphenyl)propane is more preferable.

The bifunctional epoxy compound (B) has the bisphenol skeleton that is derived from a bifunctional phenol compound and the glycidyl group that is bound to each of the termini of the bisphenol skeleton via an ether bond. The bifunctional epoxy compound (B) is not limited in particular in terms of the number of ether bonds via which the bisphenol skeleton and the glycidyl group are bound to each other, provided that the number is one or more. Preferably, the upper limit of the number is 100. Since the bifunctional epoxy compound (B) has the ether bond, the thermosetting resin has a suitable melt viscosity.

The bifunctional phenol compound includes the same compounds as the bifunctional phenol compound (A). Among the above-listed compounds, bis(4-hydroxyphenyl)methane and 2,2-bis(4-hydroxyphenyl)propane are preferable, and 2,2-bis(4-hydroxyphenyl)propane is more preferable.

That is, in a case where the bifunctional epoxy compound (B) are indicated by specific names, 2,2-bis(4-glycidyloxyphenyl)propane (common name: bisphenol A type epoxy compound) and bis(4-(glycidyloxy)phenyl)methane (common name: bisphenol F type epoxy compound) are preferable. More preferable is 2,2-bis(4-glycidyloxyphenyl)propane.

The aromatic diamine compound (C) has two or more aromatic rings and two amino groups that are directly bound to any of the two or more aromatic rings. The aromatic diamine compound (C) preferably has two aromatic rings in the compound, and preferably has amino groups in the respective aromatic rings. The aromatic diamine compound preferably has a symmetrical molecular structure.

Examples of the aromatic diamine compound (C) include 4,4'-oxydianiline, 3,4'-oxydianiline, 3,3'-diaminodiphenylmethane, 4,4'-diaminodiphenylmethane, bis(3-aminophenyl)methanone, bis(4-aminophenyl)methanone, bis(3-aminophenyl)sulfone, bis(4-aminophenyl)sulfone, resorcinol bis(4-aminophenyl) ether (TPE-R), resorcinol bis(3-aminophenyl)ether, 4,4'-isopropylidene bis[(4-aminophenoxy) benzene] (BAPP), 4,4'-(hexafluoroisopropylidene)dianiline, 4,4'-sulfonyl bis[(4,1-phenylene)oxy]dianiline, 4,4'-diamino-2,2'-bis(trifluoromethyl)biphenyl, 3,3'-[(4,4'-bip he nylyle ne) bisoxy] bisaniline, 4,4'-(biphenyl-4,4'-diylbisoxy)bisaniline, and 4,4'-(9-fluorenylidene)dianiline.

Among the above-listed aromatic diamine compounds, resorcinol bis(4-aminophenyl)ether and 4,4'-isopropylidene bis[(4-aminophenoxy)benzene] are preferable. More preferable is 4,4'-isopropylidene bis[(4-aminophenoxy)benzene] .

In the general formula (I), a ratio between the number of moles of the bifunctional phenol compound (A) and the number of moles of the bifunctional epoxy compound (B) (the number of moles of the bifunctional phenol compound (A)/the number of moles of the bifunctional epoxy compound (B)) is preferably 2/1 to 10/1, and more preferably 3/1 to 5/1. In a case where the ratio between the number of moles of (A) and the number of moles of (B) falls within the above range, it is possible to obtain the thermosetting resin which is excellent in thermoplasticity during remolding.

In the general formula (I), m is a polymerization degree, and represents an integer of 1 or more. From the viewpoint of improving mechanical properties before and after curing, m is preferably 2 or more, more preferably 3 or more, and even more preferably 5 or more. From the viewpoint of maintaining fluidity during molding, m is preferably 500 or less, more preferably 300 or less, even more preferably 200 or less, and particularly preferably 100 or less.

In the general formula (I), n is a polymerization degree, and represents an integer of 0 or more. From the viewpoint of improving the mechanical properties before and after curing, n is preferably 1 or more, more preferably 2 or more, and even more preferably 3 or more. From the viewpoint of maintaining the fluidity during molding, n is preferably 500 or less, more preferably 300 or less, even more preferably 200 or less, and particularly preferably 100 or less.

The thermosetting resin of the present disclosure may contain another structure of the benzoxazine ring structure represented by the general formula (I). For example, the thermosetting resin may have a structure derived from a monocyclic phenol compound for capping a terminus/termini of the structure represented by the general formula (I).

The weight-average molecular weight (Mw) of the thermosetting resin of the present disclosure is preferably not less than 1,000 and not more than 100,000 before curing. The weight-average molecular weight (Mw) is measured by GPC. From the viewpoint of improving the mechanical properties of the thermosetting resin before curing, Mw is more preferably not less than 2,000, and more preferably not more than 30,000. Mw is even more preferably not less than 3,000, and even more preferably not more than 20,000. Note, here, that the thermosetting resin before curing is preferably the thermosetting resin which has not been subjected to a washing process (described later).

From the viewpoint of ease of handling and high processability, the minimum melt viscosity (Pa·s) of the thermosetting resin of the present disclosure is preferably not more than 5,000 mPa·s, more preferably not more than 3,000 mPa·s, and most preferably not more than 1,000 mPa·s.

### [2. Method for producing thermosetting resin]

A method for producing the thermosetting resin of the present disclosure is a method for producing the thermosetting resin which has the benzoxazine ring structure in the main chain, including: a step (s1) of reacting the bifunctional phenol compound (A) and the bifunctional epoxy compound (B); a step (s2) of reacting a reaction product obtained in the step (s1), the aromatic diamine compound (C), and an aldehyde compound (D) and/or a step (s3) of reacting the bifunctional phenol compound (A), the reaction product obtained in the step (s1), the aromatic diamine compound (C), and the aldehyde compound (D), wherein the bifunctional epoxy compound (B) has a skeleton which is derived from a bifunctional phenol compound and two glycidyl groups each of which is bound to the skeleton via an ether bond, and the aromatic diamine compound (C) has two or more aromatic rings and two amino groups that are directly bound to any of the two or more aromatic rings. Note that descriptions of matters which have been already described in the section [1. Thermosetting resin] are omitted.

The step (s1) is a step of reacting the bifunctional phenol compound (A) and the bifunctional epoxy compound (B). In the step (s1), a Lewis base such as triphenylphosphine (TPP) or diazabicycloundecene (DBU) may be further added as a reaction accelerator.

The step (s2) is a step of reacting the reaction product obtained in the step (s1), the aromatic diamine compound (C), and the aldehyde compound (D). By the step (s2), a unit which is indicated by the polymerization degree m shown in the general formula (I) is produced.

The step (s3) is a step of reacting the bifunctional phenol compound (A), the reaction product obtained in the step (s1), the aromatic diamine compound (C), and the aldehyde compound (D). That is, the step (s3) is a step of reacting the bifunctional phenol compound (A) which is unreacted in the step (s1), the reaction product obtained in the step (s1), the aromatic diamine compound (C), and the aldehyde compound (D). By the step (s3), in addition to the unit which is indicated by the polymerization degree m shown in the general formula (I), a unit which is indicated by the polymerization degree n is produced.

The aldehyde compound (D) is not limited in particular, but is preferably formaldehyde. The formaldehyde is preferably paraformaldehyde, which is a polymer of the formaldehyde, or may be used in the form of formalin, which is an aqueous solution of the formaldehyde, or the like.

The step (s1) and the step (s2) and/or the step (s3) may be carried out as follows. That is, the step (s1) may be carried out first, and the step (s2) and/or the step (s3) may be carried out later. Before all of the raw materials in the step (s1) become the reaction product, i.e., while the step (s1) is in progress, the step (s2) and/or the step (s3) may be carried out. That is, there may be a time period during which the step (s1) and the step (s2) and/or the step (s3) are carried out simultaneously.

The materials in the step (s1) may be added to the same system as the materials in the step (s2) and/or the step (s3), and then these materials are reacted with each other. Alternatively, after the reaction in the step (s1) progresses, the materials in the step (s2) and/or the step (s3) may be added to the same system, and then the step (s2) and/or the step (s3) may be carried out. In other words, the production method of the present disclosure includes a step of reacting the bifunctional phenol compound (A), the bifunctional epoxy compound (B), the aromatic diamine compound (C), and the aldehyde compound (D).

The steps (s2) and (s3) may be carried out simultaneously. The step (s2) may be carried out first, and the step (s3) may be carried out later. The step (s3) may be carried out first, and the step (s2) may be carried out later.

In the production method of the present disclosure, a ratio between the number of moles of the bifunctional phenol compound (A) and the number of moles of the bifunctional epoxy compound (B) is preferably the bifunctional phenol compound (A)/the bifunctional epoxy compound (B)=2/1 to 10/1, and more preferably 3/1 to 5/1. In a case where the ratio between the number of moles of the bifunctional phenol compound (A) and the number of moles of the bifunctional epoxy compound (B) falls within the above range, it is possible to suitably produce a benzoxazine ring.

In the production method of the present disclosure, a ratio between the number of moles of the bifunctional phenol compound (A) and the bifunctional epoxy compound (B) (hereinafter, (A) and (B) are also collectively referred to as a phenol component) and the number of moles of the aromatic diamine compound (C) is preferably the phenol component/the aromatic diamine compound (C)=1/3 to 3/1, and more preferably 10/5 to 10/8.

In the production method of the present disclosure, a ratio between the number of moles of the phenol component and the number of moles of the aldehyde compound (D) is preferably 1/1 to 1/20, more preferably 1/2 to 1/6, and most preferably 1/2 to 1/3. In a case where the ratio between the number of moles of the phenol component and the number of moles of the aldehyde compound (D) falls within the above range, it is possible to suitably produce the benzoxazine ring.

In the production method of the present disclosure, a solvent is not limited in particular, provided that the raw materials can be dissolved therein. Examples of the solvent include chloroform, toluene, a mixed solvent of toluene and methanol, a mixed solvent of toluene and ethanol, a mixed solvent of toluene and isobutanol, and tetrahydrofuran.

A reaction temperature in the step (s1) is preferably 50°C to 300°C, and more preferably 70°C to 200°C. A reaction time in the step (s1) is preferably 0.1 hours to 100 hours, and more preferably 0.5 hours to 50 hours.

A reaction temperature in the step (s2) and/or the step (s3) is preferably 50°C to 300°C, and more preferably 70°C to 200°C. A reaction time in the step (s2) and/or the step (s3) is preferably 0.1 hours to 100 hours, and more preferably 0.5 hours to 50 hours.

In the production method of the present disclosure, a washing process may be further carried out which is a process of obtaining a solid content by filtration after mixing and stirring the obtained thermosetting resin in a solvent. The solvent used in the washing process is preferably a poor solvent which is unlikely to dissolve the thermosetting resin. Examples of the solvent include methanol, ethanol, and propanol.

### [3. Composition]

A thermosetting composition which contains the thermosetting resin of the present disclosure as a main component and contains another thermosetting resin, a thermoplastic resin, and a compounding agent as accessory components can be also prepared and used.

Examples of the another thermosetting resin include epoxy-based resins, thermosetting type modified polyphenylene ether resins, thermosetting polyimide resins, silicon resins, melamine resins, uria resins, allyl resins, phenol resins, unsaturated polyester resins, bismaleimide-based resins, alkyd resins, furan resins, polyurethane resins, and aniline resins.

Examples of the thermoplastic resin include thermoplastic epoxy resins and thermoplastic polyimide resins.

The compounding agent includes, as necessary, flame retardants, nucleating agents, antioxidants, anti-aging agents, thermal stabilizers, photo stabilizers, ultraviolet absorbers, lubricants, auxiliary flame retardants, antistatic agents, anti-fogging agents, fillers, softeners, plasticizers, and coloring agents. Each of these agents may be used alone or two or more of these agents may be used in combination. A reactive or non-reactive solvent can also be used.

### [4. Uncured molded product and partially cured molded product]

The thermosetting resin or the composition of the thermosetting resin of the present disclosure has moldability also before curing. Therefore, depending on an application and a purpose, it is possible to use an uncured molded product which is obtained by molding the thermosetting resin or the composition without curing or a partially cured molded product which is obtained by curing only a part of the thermosetting resin or the composition without curing completely. A molding temperature in this case (the maximum temperature in a case where the molding temperature is increased gradually) is not limited in particular, but is preferably not lower than room temperature and lower than 200°C, more preferably not lower than 40°C and not higher than 180°C, and most preferably not lower than 60°C and not higher than 160°C.

The dimensions and shape of each of the uncured molded product and the partially cured molded product are not limited in particular. For example, each of the uncured molded product and the partially cured molded product has a film shape, a sheet shape, a plate shape, a block shape, or the like, and may further have another part (e.g., an adhesive layer).

Each of the uncured molded product and the partially cured molded product can be used as a precursor to a cured molded product described later, and can be used, for example, as an adhesive sheet having curability.

The uncured molded product indicates one that has a degree of cure of less than 1%. Note that, for example, the degree of cure of an uncured resin which is not heated at all may be regarded as 0%, and the degree of cure of the cured molded product which is obtained by sufficiently heat-treating the uncured resin and for which, for example, it is confirmed that, in DSC, a peak corresponding to cure has disappeared may be regarded as 100%. The degree of cure of the uncured molded product may be calculated from a ratio between the area of a curing exothermic peak of the uncured resin and the area of a curing exothermic peak of the uncured molded product, each of the curing exothermic peaks being obtained from DSC.

The degree of cure of the partially cured molded product is not less than 1% and not more than 99%. From the viewpoint of repetitive thermoplasticity, the degree of cure of the partially cured molded product is preferably not less than 1% and less than 90%. In a case where the degree of cure is less than 1%, there is a case where, although thermoplastic remoldability is good, toughness during remolding is insufficient. In a case where the degree of cure is more than 99%, there is a case where the thermoplastic remoldability is insufficient. In particular, in a case where importance is placed on the thermoplastic remoldability, depending on application of the partially cured molded product or a difference in processing method required, the partially cured molded product which has a lower degree of cure is preferably used. In a case where importance is placed on the toughness during remolding, the partially cured molded product which has a higher degree of cure is preferably used.

The degree of cure of the partially cured molded product is more preferably not less than 2% and not more than 80%, more preferably not less than 2% and not more than 70%, more preferably not less than 2% and not more than 60%, even more preferably not less than 3% and not more than 40%, and most preferably not less than 3% and not more than 30%.

Each of the uncured molded product and the partially cured molded product has the thermoplastic remoldability. The thermoplastic remoldability means remoldability with which, in a case where each of the uncured molded product and the partially cured molded product is deformed in any shape and then heated at such a temperature that each of the uncured molded product and the partially cured molded product is not cured completely, each of the uncured molded product and the partially cured molded product is restored to a shape before deformation. Such a temperature that each of the uncured molded product and the partially cured molded product is not cured completely is not higher than 200°C.

Each of the uncured molded product and the partially cured molded product preferably has the toughness during remolding. The toughness during remolding refers to a property in which, in a case where each of the uncured molded product and the partially cured molded product is heated at such a temperature that each of the uncured molded product and the partially cured molded product is not cured completely, a break or a crack does not occur before and after the heating. Since each of the uncured molded product and the partially cured molded product has excellent toughness, it is possible to deform each of the uncured molded product and the partially cured molded product in any shape. For example, even in a case where an uncured film having excellent toughness is wadded up or deformed in any shape, a break, a crack, or the like does not appear in the uncured film.

Each of the uncured molded product and the partially cured molded product more preferably has, at the same time, (i) the thermoplastic remoldability and (ii) the toughness during remolding.

Each of the uncured molded product and the partially cured molded product maintains the remoldability even in a case where the deformation and the remolding by the heating are carried out once or more. In this specification, this property is referred to as "repetitive thermoplasticity". This allows the uncured molded product to be handled easily, and allows the range of use of the uncured molded product to be wider.

The glass transition temperature (Tg) of each of the uncured molded product and the partially cured molded product is preferably not higher than 300°C, more preferably not higher than 250°C, and most preferably not higher than 200°C, from the viewpoint of high remoldability and high toughness. From the viewpoint of a decomposition temperature at a time of curing, the glass transition temperature of each of the uncured molded product and the partially cured molded product is preferably not lower than -150°C, more preferably not lower than -100°C, and preferably not lower than -60°C. In a case where the glass transition temperature falls within the above range, the uncured molded product exhibits excellent toughness and a high elongation even at or around room temperature (25°C).

The mechanical characteristics of each of the uncured molded product and the partially cured molded product may be evaluated by, for example, a tensile modulus (Modulus), tensile breaking strength, and a tensile elongation at break. Each characteristic may be measured with use of a known tensile tester.

The tensile modulus of each of the uncured molded product and the partially cured molded product is preferably not less than 0.1 GPa, more preferably not less than 0.2 GPa, and most preferably not less than 0.5 GPa, from the viewpoint of high remoldability and high toughness. From the viewpoint of ease of handling, the tensile modulus of each of the uncured molded product and the partially cured molded product is preferably not more than 20 GPa, more preferably not more than 10 GPa, and most preferably not more than 5 GPa.

The tensile elongation at break of each of the uncured molded product and the partially cured molded product is preferably not less than 1%, and more preferably not less than 2%, from the viewpoint of high remoldability and high toughness.

Each of the uncured molded product and the partially cured molded product preferably has plasticity. The plasticity may be evaluated, for example, by a mandrel test in conformity with JIS K-5600-5-1:1999. In the mandrel test, it can be evaluated that a material having a smaller bend radius has higher plasticity.

### [5. Cured molded product]

In a case where the above-described molded product (uncured molded product) or the partially cured molded product of the thermosetting resin is cured by applying heat thereto, it is possible to obtain the cured molded product. It is also possible to obtain the cured molded product by, without obtaining the uncured molded product or the partially cured molded product, simultaneously molding and heating the thermosetting resin or the composition of the thermosetting resin of the present disclosure so that the thermosetting resin or the composition is cured. A curing temperature in these cases (the maximum temperature in a case where the curing temperature is increased gradually) is not limited in particular, but is preferably not lower than 200°C and not higher than 300°C, more preferably not lower than 210°C and not higher than 280°C, and most preferably not lower than 220°C and not higher than 260°C. The curing temperature of lower than 200°C may result in an insufficiently cured molded product. In a case where the curing temperature is not lower than 300°C, thermal decomposition progresses, and a desired cured molded product may not be obtained. Note, here, the cured molded product of the present disclosure indicates one that has a degree of cure of more than 99%.

The glass transition temperature (Tg) of the cured molded product is preferably not higher than 300°C, more preferably not higher than 275°C, and most preferably not higher than 250°C. In a case where priority is placed on the plasticity of the cured molded product, the glass transition temperature (Tg) of the cured molded product is preferably not higher than 200°C, more preferably not higher than 180°C, and most preferably not higher than 160°C. The glass transition temperature of the cured molded product is preferably not lower than 23°C, more preferably not lower than 50°C, and preferably not lower than 100°C.

The tensile modulus of the cured molded product is preferably not less than 0.1 GPa, more preferably not less than 0.5 GPa, and most preferably not less than 1 GPa, from the viewpoint of high toughness of the cured molded product. From the viewpoint of ease of handling of the cured molded product, the tensile modulus of the cured molded product is preferably not more than 20 GPa, more preferably not more than 10 GPa, and most preferably not more than 5 GPa.

From the viewpoint of unlikeness of break of the cured molded product, the tensile breaking strength of the cured molded product is preferably not less than 10 MPa, more preferably not less than 30 MPa, even more preferably not less than 50 MPa, and most preferably not less than 60 MPa.

The tensile elongation at break of the cured molded product is preferably not less than 2%, more preferably not less than 3%, and most preferably not less than 4%, from the viewpoint of high toughness of the cured molded product.

The cured molded product preferably has plasticity, similarly to the uncured molded product and the partially cured molded product. The plasticity may be evaluated, for example, by a mandrel test in conformity with JIS K-5600-5-1:1999.

The dimensions and shape of the cured molded product are not limited in particular. For example, the cured molded product has a film shape, a sheet shape, a plate shape, a block shape, or the like, and may further have another part (e.g., an adhesive layer).

The cured molded product can be suitably used for electronic components and apparatuses, and materials of the electronic components and apparatuses. The cured molded product can also be suitably used for multilayer substrates, laminated sheets, sealants, adhesive agents, and the like which are required to have particularly excellent dielectric characteristics. Furthermore, the cured molded product can also be used for aircraft members, automobile members, construction members, and the like. In particular, the cured molded product of the present disclosure can be suitably used to produce semipregs, prepregs, and carbon fiber composite materials.

The cured molded product may contain reinforcement fibers, from the viewpoint of improvement in mechanical strength of the cured molded product. Examples of the reinforcement fibers include inorganic fibers, organic fibers, metal fibers, and hybrid reinforcement fibers which are obtained by combining any of these fibers. One type of reinforcement fibers may be used, or two or more types of reinforcement fibers may be used.

The inorganic fibers include carbon fibers, graphite fibers, silicon carbide fibers, alumina fibers, tungsten carbide fibers, boron fibers, and glass fibers. The organic fibers include aramid fibers, high-density polyethylene fibers, other general nylon fibers, and polyester fibers. The metal fibers include fibers of stainless steel, iron, and the like. The metal fibers also include carbon-coated metal fibers in which metal fibers are coated with carbon. In particular, the reinforcement fibers are preferably carbon fibers, from the viewpoint of an increase in strength of the cured product.

In general, the carbon fibers are subjected to sizing. The carbon fibers may be used as they are. As necessary, the fibers for which a small amount of a sizing agent is used can be used, or the sizing agent can be removed by an existing method such as an organic solvent treatment or a heat treatment. The carbon fibers may be subjected to a process in which a carbon fiber bundle is opened in advance with use of air, a roller, or the like so that the resin is easily impregnated between individual carbon fibers.

The embodiments of the present invention also include a prepreg or a semipreg each of which is obtained by impregnating the reinforcement fibers with the thermosetting resin or the composition of the present disclosure. In this specification, the semipreg means a composite obtained by partially impregnating the reinforcement fibers with the thermosetting resin or the composition (semi-impregnated state) so that the reinforcement fibers and the thermosetting resin or the composition are integrated.

The prepreg can be obtained from the semipreg. For example, the prepreg can be obtained by further heating and melting the semipreg and thereby impregnating the reinforcement fibers with the resin. That is, in this specification, the prepreg can be said to be one in which a degree of impregnation of the reinforcement fibers with the resin is higher than in the semipreg.

### [6. Carbon fiber composite material]

The cured molded product of the present disclosure can be used as a carbon fiber composite material. A method for preparing the carbon fiber composite material is not limited in particular, and may be, for example, a method in which a semipreg or a prepreg each of which is a sheet obtained by impregnating carbon fibers with the resin is used or a method in which the carbon fibers (in bundled form or fabric form) are impregnated with the resin in liquid form. The cured molded product of present disclosure may be molded into the semipreg or the prepreg, and the semipreg or the prepreg may be used to prepare the carbon fiber composite material.

The semipreg or the prepreg may be obtained, for example, by (i) overlaying the cured molded product of the present disclosure on the top and back of a sheet in which the carbon fibers are impregnated with the resin in advance (carbon fiber plain weave material) and (ii) pressing the cured molded product and the sheet at a given temperature and a given pressure.

Instead of the carbon fibers, the reinforcement fibers described in [5. Cured molded product] may be used for the semipreg or the prepreg.

The carbon fiber composite material may be prepared by stacking a plurality of semipregs or prepregs and pressing the stacked semipregs or prepregs at a given temperature and a given pressure. The stacked semipregs or the prepregs may be covered with a mold releasing film. Examples of the mold releasing film include polyimide (PI) films.

The present disclosure is not limited to the embodiments, but can be altered by a skilled person in the art within the scope of the claims. The present disclosure also encompasses, in its technical scope, any embodiment derived by combining technical means disclosed in differing embodiments.

The embodiments of the present invention may include the following configurations.
<1> A thermosetting resin which has, in a main chain, a benzoxazine ring structure represented by a general formula (I):
   [wherein:
   Ar¹ represents a tetravalent aromatic group that is derived from a bifunctional phenol compound (A) and a bifunctional epoxy compound (B);
   Ar² represents a tetravalent aromatic group that is derived from the bifunctional phenol compound (A);
   R¹ and R² each independently represent a bivalent aromatic group that is derived from an aromatic diamine compound (C) having two or more aromatic rings and two amino groups which are directly bound to any of the two or more aromatic rings, and may be identical to or different from each other;
   m represents an integer of 1 or more;
   n represents an integer of 0 or more; and
   a repeating unit indicated by m and a repeating unit indicated by n are repeated randomly, repeated as blocks, or copolymerized in an alternating manner].
<2> The thermosetting resin described in < 1>, wherein the bifunctional phenol compound (A) is at least one bifunctional phenol compound selected from the group consisting of 2,2-bis(4-hydroxyphenyl)propane, 1,1-bis(4-hydroxyphenyl)- 1-phenylethane, 2,2-bis(4-hydroxyphenyl)hexafluoropropane, 2,2-bis(4-hydroxyphenyl)butane, bis(4-hydroxyphenyl)diphenylmethane, 2,2-bis(3-methyl-4-hydroxyphenyl)propane, bis(4-hydroxyphenyl)-2,2-dichloroethylene, 1,1-bis(4-hydroxyphenyl)ethane, bis(4-hydroxyphenyl) methane, 2,2-bis(4-hydroxy-3-isopropylphenyl) propane, 1,3-bis(2-(4-hydroxyphenyl)-2-propyl)benzene, bis(4-hydroxyphenyl)sulfone, 1,4-bis(2-(4-hydroxyphenyl)-2-propyl)benzene, 5,5'-(1-methylethylidene)-bis[1,1'-(bisphenyl)-2-ol]propane, 1,1-bis(4-hydroxyphenyl)-3,3,5-trimethylcyclohexane, and 1,1-bis(4-hydroxyphenyl)cyclohexane.
<3> The thermosetting resin described in <1> or <2>, wherein: the bifunctional epoxy compound (B) has (i) a bisphenol skeleton that is derived from at least one bifunctional phenol compound and (ii) a glycidyl group that is bound to each of termini of the bisphenol skeleton via an ether bond; and the at least one bifunctional phenol compound is selected from the group consisting of 2,2-bis(4-hydroxyphenyl)propane, 1,1-bis(4-hydroxyphenyl)-1-phenylethane, 2,2-bis(4-hydroxyphenyl) hexafluoropropane, 2,2-bis(4-hydroxyphenyl)butane, bis(4-hydroxyphenyl) diphenylmethane, 2,2-bis(3-methyl-4-hydroxyphenyl)propane, bis(4-hydroxyphenyl)-2,2-dichloroethylene, 1,1-bis(4-hydroxyphenyl)ethane, bis(4-hydroxyphenyl) methane, 2,2-bis(4-hydroxy-3-isopropylphenyl) propane, 1,3-bis(2-(4-hydroxyphenyl)-2-propyl)benzene, bis(4-hydroxyphenyl)sulfone, 1,4-bis(2-(4-hydroxyphenyl)-2-propyl)benzene, 5,5'-(1-methylethylidene)-bis[1,1'-(bisphenyl)-2-ol]propane, 1,1-bis(4-hydroxyphenyl)-3,3,5-trimethylcyclohexane, and 1,1-bis(4-hydroxyphenyl)cyclohexane.
<4> The thermosetting resin described in any one of <1> through <3>, wherein the aromatic diamine compound (C) is at least one aromatic diamine compound selected from the group consisting of 4,4'-oxydianiline, 3,4'-oxydianiline, 3,3'-diaminodiphenylmethane, 4,4'-diaminodiphenylmethane, bis(3-aminophenyl)methanone, bis(4-aminophenyl)methanone, bis(3-aminophenyl)sulfone, bis(4-aminophenyl)sulfone, resorcinol bis(4-aminophenyl)ether, resorcinol bis(3-aminophenyl)ether, 4,4'-isopropylidene bis[(4-aminophenoxy)benzene], 4,4'-(hexafluoroisopropylidene)dianiline, 4,4'-sulfonyl bis[(4,1-phenylene)oxy]dianiline, 4,4'-diamino-2,2'-bis(trifluoromethyl)biphenyl, 3,3'-[(4,4'-biphenylylene)bisoxy]bisaniline, 4,4'-(biphenyl-4,4'-diylbisoxy)bisaniline, and 4,4'-(9-fluorenylidene)dianiline.
<5> The thermosetting resin described in any one of <1> through <4>, wherein, in the general formula (I), a ratio between the number of moles of the bifunctional phenol compound (A) and the number of moles of the bifunctional epoxy compound (B) is the bifunctional phenol compound (A)/the bifunctional epoxy compound (B)=2/1 to 10/1.
<6> The thermosetting resin described in any one of <1> through <5>, wherein, in the general formula (I), a weight-average molecular weight (Mw) before curing is 1,000 to 100,000.
<7> The thermosetting resin described in any one of <1> through <6>, wherein an uncured molded product that is obtained by molding the thermosetting resin and that has a degree of cure of less than 1% or a partially cured molded product that is obtained by curing the thermosetting resin and that has a degree of cure of 1% to 99% has thermoplastic remoldability,
   the thermoplastic remoldability refers to a property in which, after the uncured molded product or the partially cured molded product is deformed in any shape, the uncured molded product or the partially cured molded product is restored to a shape before deformation, by heating at not higher than 200°C, and
   the uncured molded product or the partially cured molded product has repetitive thermoplasticity that is a property in which the thermoplastic remoldability is maintained even in a case where the deformation and the heating are carried out once or more.
<8> A composition which contains a thermosetting resin described in any one of < 1> through <7>.
<9> An uncured molded product which is obtained by molding a thermosetting resin described in any one of <1> through <7> or a composition described in <8>.
<10> A partially cured molded product which is obtained by partially curing a thermosetting resin described in any one of <1> through <7>, a composition described in <8>, or an uncured molded product described in <9> and which has a degree of cure of 1% to 99%.
<11> A cured molded product which is obtained by curing a thermosetting resin described in any one of <1> through <7>, a composition described in <8>, an uncured molded product described in <9>, or a partially cured molded product described in <10>.
<12> A prepreg or a semipreg each of which is obtained by impregnating reinforcement fibers with a thermosetting resin described in any one of <1> through <7> or a composition described in <8>.
<13> A thermosetting resin which has a benzoxazine ring structure in a main chain, wherein
   an uncured molded product that is obtained by molding the thermosetting resin and that has a degree of cure of less than 1% or a partially cured molded product that is obtained by curing the thermosetting resin and that has a degree of cure of 1% to 99% has thermoplastic remoldability,
   the thermoplastic remoldability refers to a property in which, after the uncured molded product or the partially cured molded product is deformed in any shape, the uncured molded product or the partially cured molded product is restored to a shape before deformation, by heating at not higher than 200°C, and
   the uncured molded product or the partially cured molded product has repetitive thermoplasticity that is a property in which the thermoplastic remoldability is maintained even in a case where the deformation and the heating are carried out once or more.
<14> A method for producing a thermosetting resin which has a benzoxazine ring structure in a main chain, including:
   a step (s1) of reacting a bifunctional phenol compound (A) and a bifunctional epoxy compound (B); and
   a step (s2) of reacting a reaction product obtained in the step (s1), an aromatic diamine compound (C), and an aldehyde compound (D) and/or a step (s3) of reacting the bifunctional phenol compound (A), the reaction product obtained in the step (s1), the aromatic diamine compound (C), and the aldehyde compound (D), wherein
   the bifunctional epoxy compound (B) has (i) a bisphenol skeleton that is derived from a bifunctional phenol compound and (ii) a glycidyl group that is bound to each of termini of the bisphenol skeleton via an ether bond, and
   the aromatic diamine compound (C) has two or more aromatic rings and two amino groups that are directly bound to any of the two or more aromatic rings.
<15> The method described in <14>, wherein a ratio between the number of moles of the bifunctional phenol compound (A) and the number of moles of the bifunctional epoxy compound (B) is (A)/(B)=2/1 to 10/1.

### Examples

The following description will discuss examples of the present invention.

### <Test methods>

### (1) Molecular weight measurement

A number average molecular weight (Mn) and a weight average molecular weight (Mw) were determined in terms of standard polystyrene with use of a gel permeation chromatography (GPC, manufactured by Shimadzu Corporation, solvent: dimethylformamide (DMF).

### (2) Minimum melt viscosity measurement

A resin powder of a produced thermosetting resin was subjected to a measurement with use of ARES G2 (manufactured by TA Instruments) with 25-mm parallel plates, at a temperature increase rate of 5°C/min, at an angular frequency of 10.0 rad/s (1.6 Hz), and with a strain of 0.01%. Note that the minimum melt viscosity means the minimum value of a melt viscosity measured under the above condition.

### (3) Glass transition temperature (Tg)

A DMA curve of a cured film was measured with use of a dynamic viscoelasticity measurement device (DVA-200, manufactured by IT Keisoku Seigyo Kabushikigaisha) at a frequency of 1 Hz and at a temperature increase rate of 5°C/min. A temperature at a point of intersection of (i) a tangent at an inflection point of the obtained DMA curve with respect to a storage elastic modulus (E') and (ii) a baseline was regarded as Tg.

### (4) Tensile modulus (Modulus), tensile breaking strength, and tensile elongation at break

A tensile test was carried out with respect to the cured film with use of a tensile tester (EZ-SX or AGS-X, manufactured by Shimadzu Corporation). A test temperature was set to room temperature. A tensile speed was set to 5 mm/min. The shape of a test piece was 50 mm long and 3 mm wide.

### (5) Thermoplasticity (toughness during remolding, thermoplastic remoldability)

The thermoplasticity (toughness during remolding and thermoplastic remoldability) of an uncured film was visually evaluated. The toughness was evaluated by visually observing the presence or absence of a break, a crack, or the like in the film when the film was manually deformed each of before and after heating. The remoldability was evaluated by whether or not the deformed film was restored to a state before deformation, when the deformed film was heated for a given time at such a given temperature that the deformed film was not cured completely.

### (Criteria of evaluation of toughness)

Good...No break or crack was observed in the film. Poor...A break or crack was observed in the film.

### (Criteria of evaluation of remoldability)

Good...The film was restored to the state before the deformation.

Satisfactory... Between Good and Poor.

Poor... The film was remained deformed or was not restored to the state before the deformation.

### (6) Plasticity evaluation (mandrel test)

The plasticity of each of a partially cured film and the cured film was evaluated by a mandrel test in conformity with JIS K-5600-5-1:1999. The Elcometer 1500 Cylindrical Mandrel set was used. Each of the films was hung on each of a plurality of cylindrical mandrels having different diameters (2 mm to 32 mm), and both ends of each of the films were pulled. That is, both ends of each of the films were pulled perpendicularly with respect to the lengthwise direction of each of the cylindrical mandrels in a state where each of the films was bent along the circumferential surface of each of the cylindrical mandrels. In this case, the diameter of the smallest one of the cylindrical mandrels with which each of the films did not break was determined and regarded as a bend radius (mm).

### <Production of resin>

Materials used to produce resins are shown below.

### (Bifunctional phenol compound (A))

### 2,2-bis(4-hydroxyphenyl)propane (bisphenol A, BPA) (manufactured by Tokyo Chemical Industry Co., Ltd. (TCI))

### (Bifunctional epoxy compound (B))

2,2-bis(4-glycidyloxyphenyl)propane (common name: bisphenol A type epoxy compound, product name: JER828) (manufactured by Mitsubishi Chemical Corporation)
Bis(4-(glycidyloxy)phenyl)methane (common name: bisphenol F type epoxy compound, product name: JER806)
(manufactured by Mitsubishi Chemical Corporation) (Aromatic amine compound (C))
· 4,4'-isopropylidene bis[(4-aminophenoxy)benzene] (BAPP) (manufactured by TCI)
Resorcinol bis(4-aminophenyl)ether (TPE-R) (manufactured by TCI)

### (Other compounds)

· Triphenylphosphine (TPP) (manufactured by TCI)
· Paraformaldehyde (manufactured by Merck)

### [Example 1]

Into 13 mL of toluene, JER828 (6.47 g) and BPA (15.53 g) were introduced. A reaction solution was stirred and mixed at ordinary temperature for 20 minutes. Next, the reaction solution was heated to 110°C, and then stirred and mixed for 30 minutes. Subsequently, TPP (0.067 g) was added. Heating and stirring were stopped after 6 hours. The reaction solution was dried in a vacuum at 100°C, and consequently a precursor A was obtained as a solid content. According to measurement of the molecular weights of the precursor A by GPC, the number average molecular weight (Mn) was 1276 and the weight-average molecular weight (Mw) was 2080, in terms of standard polystyrene.

Into 15 mL of toluene, the precursor A (5.0 g) was introduced. A reaction solution was stirred at ordinary temperature for 20 minutes. Next, the reaction solution was heated to 100°C, and paraformaldehyde (0.9 g) and BAPP (2.8 g) were added. Heating and stirring were stopped after 3 hours. According to measurement of the molecular weights of this reaction solution by GPC, the number average molecular weight (Mn) was 3755 and the weight-average molecular weight (Mw) was 7860, in terms of standard polystyrene. The reaction solution was dried in a vacuum at 100°C, and consequently a solid content was obtained. The obtained solid content was powdered. A powder thus obtained was mixed in methanol so that the concentration became 5%. A mixture thus obtained was stirred for 1 hour. Subsequently, a solid content was obtained by filtration. The obtained solid content was dried in a vacuum at 100°C for 1 hour. In this manner, a benzoxazine resin 1, which was a target object, was obtained.

### [Example 2]

Into 13 mL of toluene, JER828 (7.86 g) and BPA (14.14 g) were introduced. A reaction solution was stirred and mixed at ordinary temperature for 20 minutes. Next, the reaction solution was heated to 110°C, and then stirred and mixed for 30 minutes. Subsequently, TPP (0.067 g) was added. Heating and stirring were stopped after 6 hours. The reaction solution was dried in a vacuum at 100°C, and consequently a precursor B was obtained as a solid content. According to measurement of the molecular weights of the precursor B by GPC, the number average molecular weight (Mn) was 1439 and the weight-average molecular weight (Mw) was 2569, in terms of standard polystyrene.

Into 25 mL of toluene, the precursor B (9.49 g) was introduced. A reaction solution was stirred at ordinary temperature for 20 minutes. Next, the reaction solution was heated to 100°C, and paraformaldehyde (1.7 g) and TPE-R (3.91 g) were added. Heating and stirring were stopped after 3 hours. According to measurement of the molecular weights of this reaction solution by GPC, the number average molecular weight (Mn) was 5351 and the weight-average molecular weight (Mw) was 15449, in terms of standard polystyrene. The reaction solution was dried in a vacuum at 100°C, and consequently a solid content was obtained. The obtained solid content was powdered. A powder thus obtained was mixed in methanol so that the concentration became 5%. A mixture thus obtained was stirred for 1 hour. Subsequently, a solid content was obtained by filtration. The obtained solid content was dried in a vacuum at 100°C for 1 hour. In this manner, a benzoxazine resin 2, which was a target object, was obtained.

### [Example 3]

A precursor B was synthesized with use of a method described in Example 2. Into 25 mL of toluene, the precursor B (9.49 g) was introduced. A reaction solution was stirred at ordinary temperature for 20 minutes. Next, the reaction solution was heated to 100°C, and paraformaldehyde (1.5 g) and BAPP (4.97 g) were added. Heating and stirring were stopped after 3 hours. According to measurement of the molecular weights of this reaction solution by GPC, the number average molecular weight (Mn) was 5673 and the weight-average molecular weight (Mw) was 13535, in terms of standard polystyrene. The reaction solution was dried in a vacuum at 100°C, and consequently a solid content was obtained. The obtained solid content was powdered. A powder thus obtained was mixed in methanol so that the concentration became 5%. A mixture thus obtained was stirred for 1 hour. Subsequently, a solid content was obtained by filtration. The obtained solid content was dried in a vacuum at 100°C for 1 hour. In this manner, a benzoxazine resin 3, which was a target object, was obtained.

### [Example 4]

Into 13 mL of toluene, JER806 (5.85 g) and BPA (16.15 g) were introduced. A reaction solution was stirred and mixed at ordinary temperature for 20 minutes. Next, the reaction solution was heated to 110°C, and then stirred and mixed for 30 minutes. Subsequently, TPP (0.067 g) was added. Heating and stirring were stopped after 6 hours. The reaction solution was dried in a vacuum at 100°C, and consequently a precursor C was obtained as a solid content. According to measurement of the molecular weights of the precursor C by GPC, the number average molecular weight (Mn) was 1166 and the weight-average molecular weight (Mw) was 1804, in terms of standard polystyrene.

Into 25 mL of toluene, the precursor C (8.18 g) was introduced. A reaction solution was stirred at ordinary temperature for 20 minutes. Next, the reaction solution was heated to 100°C, and paraformaldehyde (1.6 g) and BAPP (5.27 g) were added. Heating and stirring were stopped after 3 hours. According to measurement of the molecular weights of this reaction solution by GPC, the number average molecular weight (Mn) was 3887 and the weight-average molecular weight (Mw) was 7555, in terms of standard polystyrene. The reaction solution was dried in a vacuum at 100°C, and consequently a solid content was obtained. The obtained solid content was powdered. A powder thus obtained was mixed in methanol so that the concentration became 5%. A mixture thus obtained was stirred for 1 hour. Subsequently, a solid content was obtained by filtration. The obtained solid content was dried in a vacuum at 100°C for 1 hour. In this manner, a benzoxazine resin 4, which was a target object, was obtained.

### [Example 5]

A precursor C was synthesized with use of a method described in Example 4. Into 25 mL of toluene, the precursor C (3.95 g) was introduced. A reaction solution was stirred at ordinary temperature for 20 minutes. Next, the reaction solution was heated to 100°C, and paraformaldehyde (0.93 g) and BAPP (3.13 g) were added. Heating and stirring were stopped after 3 hours. According to measurement of the molecular weights of this reaction solution by GPC, the number average molecular weight (Mn) was 17100 and the weight-average molecular weight (Mw) was 6800, in terms of standard polystyrene. The reaction solution was dried in a vacuum at 100°C, and consequently a solid content was obtained. The obtained solid content was powdered. A powder thus obtained was mixed in methanol so that the concentration became 5%. A mixture thus obtained was stirred for 1 hour. Subsequently, a solid content was obtained by filtration. The obtained solid content was dried in a vacuum at 100°C for 1 hour. In this manner, a benzoxazine resin 5, which was a target object, was obtained.

### [Example 6]

Into 13 mL of toluene, JER806 (9.94 g) and BPA (12.06 g) were introduced. A reaction solution was stirred and mixed at ordinary temperature for 20 minutes. Next, the reaction solution was heated to 110°C, and then stirred and mixed for 30 minutes. Subsequently, TPP (0.067 g) was added. Heating and stirring were stopped after 6 hours. The reaction solution was dried in a vacuum at 100°C, and consequently a precursor D was obtained as a solid content.

Into 25 mL of toluene, the precursor D (8.77 g) was introduced. A reaction solution was stirred at ordinary temperature for 20 minutes. Next, the reaction solution was heated to 100°C, and paraformaldehyde (1.41 g) and BAPP (4.81 g) were added. Heating and stirring were stopped after 3 hours. According to measurement of the molecular weights of this reaction solution by GPC, the number average molecular weight (Mn) was 7000 and the weight-average molecular weight (Mw) was 18200, in terms of standard polystyrene. The reaction solution was dried in a vacuum at 100°C, and consequently a solid content was obtained. The obtained solid content was powdered. A powder thus obtained was mixed in methanol so that the concentration became 5%. A mixture thus obtained was stirred for 1 hour. Subsequently, a solid content was obtained by filtration. The obtained solid content was dried in a vacuum at 100°C for 1 hour. In this manner, a benzoxazine resin 6, which was a target object, was obtained.

### [Comparative Example 1]

Into a solution obtained by mixing 20 mL of toluene and 10 mL of ethanol, BAPP (6.49 g) and paraformaldehyde (1.90 g) were introduced. A reaction solution was stirred and mixed at ordinary temperature for 20 minutes. Next, the reaction solution was heated to 100°C, and then stirred and mixed. BPA (3.61 g) was added to the reaction solution after 1 hour. Heating and stirring were stopped after 22 hours. According to measurement of the molecular weights of this reaction solution by GPC, the number average molecular weight (Mn) was 10800 and the weight-average molecular weight (Mw) was 75900, in terms of standard polystyrene. The reaction solution was dried in a vacuum at 100°C. In this manner, a benzoxazine resin 7, which was a target object, was obtained.

### [Example 7]

On a Teflon (registered trademark) impregnated glass cloth, 0.45 g of each of the benzoxazine resins 1 to 6 obtained in respective Examples 1 to 6 was weighed, and surrounded by a 125-pm spacer (external dimensions: 10 cm × 8 cm, internal dimensions: 6 cm × 4 cm). Each of the benzoxazine resins was further covered with a Teflon (registered trademark) impregnated glass cloth, and, with use of a hot press, heat-pressed at 150°C for 30 minutes while being pressurized at 5 MPa. Film-shaped uncured molded products (uncured films) were thus obtained.

Any of the uncured films obtained from the respective benzoxazine resins 1 to 6 did not break during normal handing. That is, although, during normal handling of a film, a bend stress corresponding to a bend radius R of approximately several ten centimeters in a mandrel test may be applied to the film, each of the uncured films had such plasticity as not to break under such a condition.

With use of a hot press, each of the film-shaped uncured molded products of the benzoxazine resins thus obtained was heat-pressed at 150°C for 5 minutes while being pressurized at 5 MPa, and further heated to 240°C and heat-pressed for 1 hour. Film-shaped cured molded products (cured films) were thus obtained.

Further, each of the obtained uncured films was cut and divided into four or more films at room temperature. The cut films were remolded by heat-pressing the cut films under the same condition as that when each of the uncured films was prepared, i.e., at 150°C for 30 minutes while pressurizing the cut films at 5 MPa. Each of the uncured films thus remolded was used to evaluate the remoldability (toughness during remolding and thermoplasticity during remolding) of each of the uncured films.

### [Comparative Example 2]

It was attempted to obtain a film-shaped uncured molded product (uncured film) and a film-shaped cured molded product (cured film) in a manner similar to that in Example 7, except that the benzoxazine resin 7 obtained in Comparative Example 1 was used. However, the benzoxazine resin 7 was not melted at 150°C, and a film was not obtained. A cured film was obtained by pressurizing the benzoxazine resin 7 at 180°C and 5 MPa and then heating it to 240°C and holding it for 1 hour.

Table 1 shows the characteristics of the benzoxazine resins (resin powders), the uncured films, and the cured films.

**[Table 1]**

| | | Example 1 | Example 2 | Example 3 | Example 4 | Example 5 | Example 6 | Comparative Example 1 |
|---|---|---|---|---|---|---|---|---|
| Benzoxazine resin | | 1 | 2 | 3 | 4 | 5 | 6 | 7 |
| Resin powder | Minimum melt viscosity (Pa·s) / Tem perature | 49/181 °C | 320/180°C | 782/182°C | 92/182°C | 2591/179°C | 867/179°C | 4490/180°C |
| Cured film | Tg(°C) | 147 | 140 | 147 | 145 | 156 | 134 | 187 |
| | Tensile modulus (GPa) | 2.2 | 2.4 | 2.3 | 2.3 | 2.6 | 2.4 | 2.8 |
| | Tensile breaking strength (MPa) | 72 | 83 | 81 | 67 | 77 | 75 | 45 |
| | Tensile elongation at break (%) | 4.6 | 5.3 | 5.8 | 4 | 4.6 | 5.1 | 1.9 |
| Uncured film | Thermoplasticity during remolding | Good | Good | Good | Good | Good | Good | Poor |
| | Toughness during remolding | Good | Good | Satisfactory | Good | Good | Good | Poor |

As is clear from Table 1, it was found possible to obtain uncured films from the benzoxazine resins 1 to 6, each of which had a structure of the general formula (I), and further obtain cured films by curing the uncured films.

It was found that the benzoxazine resins 1 to 6 enabled remolded uncured films to be obtained by remolding of the uncured films, i.e., were excellent in thermoplasticity during remolding.

It was not possible to obtain an uncured film from the benzoxazine resin 7, which did not have a structure of the general formula (I), by heat and pressure-press at 150°C. Therefore, it was also found impossible to remold an uncured film.

### Industrial Applicability

The present disclosure can be used in the fields in which thermosetting resins are used.

## Claims

1. A thermosetting resin which has, in a main chain, a benzoxazine ring structure represented by a general formula (I): 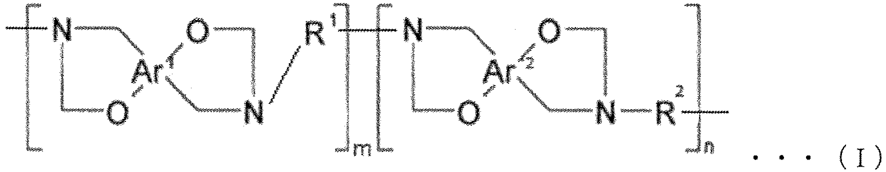 [wherein:
Ar¹ represents a tetravalent aromatic group that is derived from a bifunctional phenol compound (A) and a bifunctional epoxy compound (B);
Ar² represents a tetravalent aromatic group that is derived from the bifunctional phenol compound (A);
R¹ and R² each independently represent a bivalent aromatic group that is derived from an aromatic diamine compound (C) having two or more aromatic rings and two amino groups which are directly bound to any of the two or more aromatic rings, and may be identical to or different from each other;
m represents an integer of 1 or more;
n represents an integer of 0 or more; and
a repeating unit indicated by m and a repeating unit indicated by n are repeated randomly, repeated as blocks, or copolymerized in an alternating manner].

2. The thermosetting resin as set forth in claim 1, wherein the bifunctional phenol compound (A) is at least one bifunctional phenol compound selected from the group consisting of 2,2-bis(4-hydroxyphenyl)propane, 1,1-bis(4-hydroxyphenyl)- 1-phenylethane, 2,2-bis(4-hydroxyphenyl)hexafluoropropane, 2,2-bis(4-hydroxyphenyl)butane, bis(4-hydroxyphenyl)diphenylmethane, 2,2-bis(3-methyl-4-hydroxyphenyl)propane, bis(4-hydroxyphenyl)-2,2-dichloroethylene, 1,1-bis(4-hydroxyphenyl)ethane, bis(4-hydroxyphenyl) methane, 2,2-bis(4-hydroxy-3-isopropylphenyl) propane, 1,3-bis(2-(4-hydroxyphenyl)-2-propyl)benzene, bis(4-hydroxyphenyl)sulfone, 1,4-bis(2-(4-hydroxyphenyl)-2-propyl)benzene, 5,5'-(1-methylethylidene)-bis[1,1'-(bisphenyl)-2-ol]propane, 1,1-bis(4-hydroxyphenyl)-3,3,5-trimethylcyclohexane, and 1,1-bis(4-hydroxyphenyl)cyclohexane.

3. The thermosetting resin as set forth in claim 1, wherein:
the bifunctional epoxy compound (B) has (i) a bisphenol skeleton that is derived from at least one bifunctional phenol compound and (ii) a glycidyl group that is bound to each of termini of the bisphenol skeleton via an ether bond; and
the at least one bifunctional phenol compound is selected from the group consisting of 2,2-bis(4-hydroxyphenyl)propane, 1,1-bis(4-hydroxyphenyl)-1-phenylethane, 2,2-bis(4-hydroxyphenyl)hexafluoropropane, 2,2-bis(4-hydroxyphenyl)butane, bis(4-hydroxyphenyl)diphenylmethane, 2,2-bis(3-methyl-4-hydroxyphenyl)propane, bis(4-hydroxyphenyl)-2,2-dichloroethylene, 1,1-bis(4-hydroxyphenyl)ethane, bis(4-hydroxyphenyl) methane, 2,2-bis(4-hydroxy-3-isopropylphenyl) propane, 1,3-bis(2-(4-hydroxyphenyl)-2-propyl)benzene, bis(4-hydroxyphenyl)sulfone, 1,4-bis(2-(4-hydroxyphenyl)-2-propyl)benzene, 5,5'-(1-methylethylidene)-bis[1,1'-(bisphenyl)-2-ol]propane, 1,1-bis(4-hydroxyphenyl)-3,3,5-trimethylcyclohexane, and 1,1-bis(4-hydroxyphenyl)cyclohexane.

4. The thermosetting resin as set forth in claim 1, wherein the aromatic diamine compound (C) is at least one aromatic diamine compound selected from the group consisting of 4,4'-oxydianiline, 3,4'-oxydianiline, 3,3'-diaminodiphenylmethane, 4,4'-diaminodiphenylmethane, bis(3-aminophenyl) methanone, bis(4-amino phenyl) methanone, bis(3-aminophenyl)sulfone, bis(4-aminophenyl)sulfone, resorcinol bis(4-aminophenyl)ether, resorcinol bis(3-aminophenyl)ether, 4,4'-isopropylidene bis[(4-aminophenoxy)benzene], 4,4'-(hexafluoroisopropylidene)dianiline, 4,4'-sulfonyl bis[(4,1-phenylene)oxy]dianiline, 4,4'-diamino-2,2'-bis(trifluoromethyl)biphenyl, 3,3'-[(4,4'-biphenylylene)bisoxy]bisaniline, 4,4'-(biphenyl-4,4'-diylbisoxy)bisaniline, and 4,4'-(9-fluorenylidene)dianiline.

5. The thermosetting resin as set forth in claim 1, wherein, in the general formula (I), a ratio between the number of moles of the bifunctional phenol compound (A) and the number of moles of the bifunctional epoxy compound (B) is the bifunctional phenol compound (A)/the bifunctional epoxy compound (B)=2/1 to 10/ 1.

6. The thermosetting resin as set forth in claim 1, wherein, in the general formula (I), a weight-average molecular weight (Mw) before curing is 1,000 to 100,000.

7. The thermosetting resin as set forth in claim 1, wherein
an uncured molded product that is obtained by molding the thermosetting resin and that has a degree of cure of less than 1% or a partially cured molded product that is obtained by curing the thermosetting resin and that has a degree of cure of 1% to 99% has thermoplastic remoldability,
the thermoplastic remoldability refers to a property in which, after the uncured molded product or the partially cured molded product is deformed in any shape, the uncured molded product or the partially cured molded product is restored to a shape before deformation, by heating at not higher than 200°C, and
the uncured molded product or the partially cured molded product has repetitive thermoplasticity that is a property in which the thermoplastic remoldability is maintained even in a case where the deformation and the heating are carried out once or more.

8. A composition which comprises a thermosetting resin recited in any one of claims 1 through 7.

9. An uncured molded product which is obtained by molding a thermosetting resin recited in any one of claims 1 through 7.

10. A partially cured molded product which is obtained by partially curing a thermosetting resin recited in any one of claims 1 through 7 and which has a degree of cure of 1% to 99%.

11. A cured molded product which is obtained by curing a thermosetting resin recited in any one of claims 1 through 7.

12. A prepreg or a semipreg each of which is obtained by impregnating reinforcement fibers with a thermosetting resin recited in any one of claims 1 through 7.

13. A thermosetting resin which has a benzoxazine ring structure in a main chain, wherein
an uncured molded product that is obtained by molding the thermosetting resin and that has a degree of cure of less than 1% or a partially cured molded product that is obtained by curing the thermosetting resin and that has a degree of cure of 1% to 99% has thermoplastic remoldability,
the thermoplastic remoldability refers to a property in which, after the uncured molded product or the partially cured molded product is deformed in any shape, the uncured molded product or the partially cured molded product is restored to a shape before deformation, by heating at not higher than 200°C, and
the uncured molded product or the partially cured molded product has repetitive thermoplasticity that is a property in which the thermoplastic remoldability is maintained even in a case where the deformation and the heating are carried out once or more.

14. A method for producing a thermosetting resin which has a benzoxazine ring structure in a main chain, comprising:
a step (s1) of reacting a bifunctional phenol compound (A) and a bifunctional epoxy compound (B); and
a step (s2) of reacting a reaction product obtained in the step (s1), an aromatic diamine compound (C), and an aldehyde compound (D) and/or a step (s3) of reacting the bifunctional phenol compound (A), the reaction product obtained in the step (s1), the aromatic diamine compound (C), and the aldehyde compound (D), wherein
the bifunctional epoxy compound (B) has (i) a bisphenol skeleton that is derived from a bifunctional phenol compound and (ii) a glycidyl group that is bound to each of termini of the bisphenol skeleton via an ether bond, and
the aromatic diamine compound (C) has two or more aromatic rings and two amino groups that are directly bound to any of the two or more aromatic rings.

15. The method as set forth in claim 14, wherein a ratio between the number of moles of the bifunctional phenol compound (A) and the number of moles of the bifunctional epoxy compound (B) is (A)/(B)=2/1 to 10/1.
